# EUROPÄISCHE PATENTSCHRIFT

(11) **EP 3 350 889 B1**
(45) Veröffentlichungstag und Bekanntmachung des Hinweises auf die Patenterteilung: **29.01.2020**
(21) Anmeldenummer: 16774613.0
(22) Anmeldetag: 12.09.2016
(51) Int. Cl.: H01R 13/66, H01R 13/04, G01K 11/32

(54) **KONTAKTELEMENT MIT SENSOR**
CONTACT ELEMENT COMPRISING A SENSOR
ÉLÉMENT DE CONTACT POURVU D'UN CAPTEUR

(30) Priorität: 17.09.2015 DE 102015115657
(43) Veröffentlichungstag der Anmeldung: 25.07.2018
(73) Patentinhaber: HARTING Electric GmbH & Co. KG, 32339 Espelkamp (DE)
(72) Erfinder: TRÖGER, Lutz, 49082 Osnabrück (DE); BRODE, Frank, 12557 Berlin (DE)
(86) Internationale Anmeldenummer: PCT/DE2016/100425
(87) Internationale Veröffentlichungsnummer: WO 2017/045669

(56) Entgegenhaltungen:
- EP-A2- 0 274 228
- WO-A1-02/13330
- CN-B- 102 338 673
- CN-U- 202 797 505
- DE-U1- 20 201 632
- DE-U1-202007 018 305

## Beschreibung

Die Erfindung geht aus von einen Kontaktelement nach dem Oberbegriff des unabhängigen Anspruchs 1.

Derartige Kontaktelemente werden benötigt um einen elektrischen Kontakt zwischen zwei Leitungen herzustellen. Dabei sollen die Leitungen reversibel miteinander kontaktiert werden. Je nach Anwendung und übertragener Stromstärke können derartige Kontaktelemente im Betrieb sehr warm werden. Da an den Kontaktstellen teilweise große Übergangswiderstände auftreten, erwärmen sie die Kontaktelemente.

### Stand der Technik

Um ein Versagen der Kontaktelemente auf Grund zu hoher Temperaturen zu vermeiden sind aus dem Stand der Technik verschiedene Kontaktelemente mit integrierten Sensoren zur Überwachung der Temperatur bekannt.

Aus der DE 20 2007 018 305 U1 ist eine Messeinrichtung an einem Steckkontakt, mit einem Steckbereich und einem Anschlussbereich der in einer Aufnahmeöffnung in einem Kontakteinsatz in einem Steckverbindergehäuse angeordnet ist bekannt. Der elektrisch leitende Stecckontakt weist im Anschlussbereich eine Ausnehmung auf, in welcher ein Messsensor in einem elektrisch nichtleitenden Material eingebettet ist. Aus der CN 202 797 505 U ist ein Kontaktelement mit einer Nut und einer Messeinrichtung bekannt.

Nachteilig bei den aus dem Stand der Technik bekannten Kontaktelementen ist, dass die Messung der Temperatur zwar am Kontakt, jedoch nicht im Bereich der Kontaktstelle erfolgt. Die räumliche Abweichung von Messstelle und Kontaktstelle muss durch rechnerische Modelle kompensiert werden. Dadurch kann es zu Abweichungen zwischen der eigentlichen Temperatur am Kontaktpunkt des Kontaktelements und der gemessenen Temperatur kommen. Ein Versagen und Ausfall des Kontaktelements kann so nicht vollständig ausgeschlossen werden.

### Aufgabenstellung

Die Aufgabe der Erfindung besteht darin ein Kontaktelement mit Sensor vorzustellen, wobei die Messung möglichst am Kontaktpunkt des Kontaktelements erfolgt.

Die Aufgabe wird durch die kennzeichnenden Merkmale des unabhängigen Anspruchs 1 gelöst.

Vorteilhafte Ausgestaltungen der Erfindung sind in den Unteransprüchen angegeben.

Bei der Erfindung handelt es sich um ein elektrisches Kontaktelement wie aus dem Stand der Technik bekannt. Erfindungsgemäß weist das Kontaktelement eine Nut auf, in welcher eine optische Faser verläuft. Die Nut ist vorzugsweise an der Steckseite des Kontaktelements vorgesehen. Erfindungsgemäß verläuft die Nut direkt durch den Kontaktpunkt des Kontaktelements.

Zweckmäßig befinden sich an der Anschlussseite des Kontaktelements der Beginn und das Ende der Nut. Die optische Faser kann so an der Anschlussseite des Kontaktelements in die Nut geführt und aus dieser herausgeführt werden. So bildet die Nut eine Schleife an der Steckseite des Kontaktelements in welcher die optische Faser geführt ist. Zweckmäßig führt in einer weiteren bevorzugten Ausführungsform die Nut parallel von der Anschlussseite zur Steckseite.

Eine vorteilhafte Ausführungsform sieht vor, die optische Faser in die Nut einzupressen um darin gehalten zu werden. Eine weitere Ausführungsform sieht vor, die optische Faser in die Nut zu kleben.

Die optische Faser verfügt erfindungsgemäß über ein sogenanntes Bragg-Gitter. Das Bragg-Gitter dient in der optischen Faser als optischer Interferenzfilter. Dadurch werden Wellenlängen, die innerhalb einer Filterbandbreite liegen, reflektiert. Die so ausgeführte optische Faser kann dadurch als Sensor zur Messung der Temperatur genutzt werden.

Durch eine vorteilhafte Manipulation der optischen Faser, indem diese der Länger nach geschlitzt wird, kann die optische Faser auch zur Messung der Luftfeuchtigkeit herangezogen werden.

Durch das erfindungsgemäße Einsetzten der optischen Faser in die Nut im Kontaktelement können Messungen direkt im Kontaktpunkt des Kontaktelements vorgenommen werden.

### Ausführungsbeispiel

Ein Ausführungsbeispiel der Erfindung ist in den Zeichnungen dargestellt und wird im Folgenden näher erläutert. Es zeigen:
- Fig. 1: die Steckseite eines Kontaktelements;
- Fig. 2: die Steckseite eines Kontaktelements aus einer weiteren Ansicht;
- Fig. 3: einen Querschnitt durch ein Kontaktelement mit optischer Faser;
- Fig. 4: einen Querschnitt durch ein Kontaktelement;
- Fig. 5: ein Kontaktelement mit Blick auf die Steckseite; und
- Fig. 6: ein weiteres Kontaktelement.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

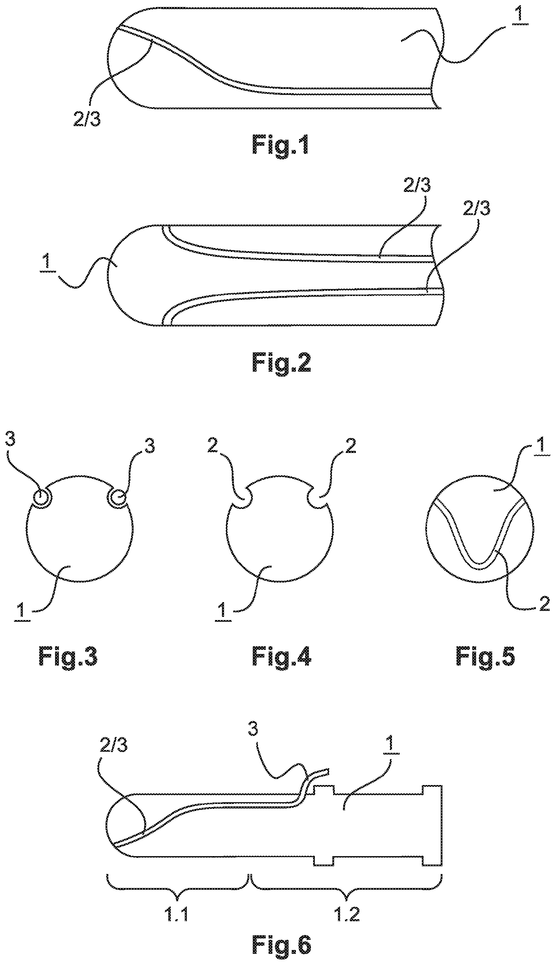

Die Figur 1 zeigt eine Steckseite 1.1 eines erfindungsgemäßen Kontaktelements 1. Entlang der Steckseite 1.1 verläuft eine Nut 2 im Kontaktelement 1. Die Nut 2 läuft bis zur links dargestellten Spitze der Steckseite 1.1. An der Spitze verläuft die Nut 2 auf die hintere Seite und dort zurück.

In der Nut 2 ist erfindungsgemäß eine optische Faser 3 eingebettet. Die optische Faser 3 ist vorzugsweise eingepresst oder eingeklebt in der Nut 2 und verläuft in dieser. Der Verlauf ist in der Figur 2 noch einmal gezeigt. Das Kontaktelement 1 ist von einer anderen Seite gezeigt. Hier ist der Verlauf der Nut 2 erkennbar, wie im rechten Bereich die Nut 2 parallel zur linken Spitze des Kontaktelements 1 hin verläuft. An der Spitze des Kontaktelements 1 läuft die Nut 2 einmal um diese herum und trifft sich auf der Rückseite.

Ein Querschnitt eines Kontaktelements 1 ist in den Figuren 3 und 4 dargestellt. Die Nut 2 nimmt die runde, optische Faser 3 auf. Je nach Ausführung der Nut 2 klemmt die optische Faser 3 selbstständig in der Nut 2 oder wird zum Beispiel durch Klebstoff in dieser fixiert.

Durch die abgerundete Spitze des Kontaktelements 1 ergibt sich an der Spitze ein geschwungener Verlauf der Nut 2 und der optischen Faser 3. Durch den Verlauf der Nut 2 und der optischen Faser 3 über die Spitze des Kontaktelements 1 wird besonders vorteilhaft die Temperatur der gesamten Steckseite 1.1 des Kontaktelements 1 messbar.

Ein ganzes Kontaktelement 1 ist in der Figur 6 noch dargestellt. Die rechte Anschlussseite 1.2 ist zur Kontaktierung einer elektrischen Leitung vorgesehen und als Crimpanschluss ausgebildet. Im Anschlussbereich 1.2 beginnt zudem die Nut 2 in welche im Anschlussbereich 1.2 die optische Faser 3 eingesetzt wird.

Die Nut 2 und die optische Faser 3 verlaufen von der Anschlussseite 1.2 zur Steckseite 1.1. An der Spitze der Steckseite 1.1 bilden Nut 2 und optische Faser 3 eine Schleife und laufen auf der rückwärtigen Seite des Kontaktelements 1 zurück zur Anschlussseite 1.2.

## Patentansprüche

1. Elektrisches Kontaktelement (1),
wobei das Kontaktelement (1) zumindest eine Nut (2) aufweist und in der Nut (2) eine optische Faser (3) verläuft,
**dadurch gekennzeichnet,**
**dass** die optische Faser (3) als Sensor ausgebildet ist, und die Nut (2) an einer, der Steckseite (1.1) abgewandten Anschlussseite (1.2) des Kontaktelements (1) beginnt und zur Steckseite (1.1). verläuft und an der Anschlussseite (1.2) wieder endet.

2. Elektrisches Kontaktelement (1) nach vorstehendem Anspruch,
**dadurch gekennzeichnet, dass**
Beginn und Ende der Nut (2) parallel von der Anschlussseite (1.2) zur Steckseite (1:1) verlaufen und an der Steckseite (1.1) miteinander verbunden sind:

3. Elektrisches Kontaktelement (1) nach einem der beiden vorstehenden Ansprüche,
**dadurch gekennzeichnet, dass**
die Nut (2) an der Steckseite (1.1) eine Schleife bildet.

4. Elektrisches Kontaktelement (1) nach einem der Ansprüche 1 bis 3,
**dadurch gekennzeichnet, dass**
die optische Faser (3) in die Nut (2) gepresst ist.

5. Elektrisches Kontaktelement (1) nach einem der Ansprüche 1 bis 3,
**dadurch gekennzeichnet, dass**
die optische Faser (3) in die Nut (2) geklebt ist.

6. Elektrisches Kontaktelement (1) nach einem der vorstehenden Ansprüche,
**dadurch gekennzeichnet, dass**
die optische Faser (3) ein Bragg-Gitter aufweist.

7. Elektrisches Kontaktelement (1) nach einem der vorstehenden Ansprüche,
**dadurch gekennzeichnet, dass**
die optische Faser (3) als Temperatursensor ausgebildet ist.

8. Elektrisches Kontaktelement (1) nach einem der Ansprüche 1 bis 6,
**dadurch gekennzeichnet, dass**
die optische Faser (3) als Feuchtigkeitssensor ausgebildet ist.

## Claims

1. An electrical contact element (1), whereas the contact element (1) has at least one groove (2) and an optical fiber (3) runs in the groove (2), **characterized in that** the optical fiber (3) is designed as a sensor, and the groove (2) starts at a connection side (1.2), remote from the plug-in side (1.1), of the contact element (1) and runs to the plug-in side (1.1) and ends again at the connection side (1.2).

2. The electrical contact element (1) as claimed in the preceding claim, **characterized in that** the start and end of the groove (2) run in parallel from the connection side (1.2) to the plug-in side (1.1) and are connected to each other on the plug-in side (1.1).

3. The electrical contact element (1) as claimed in one of the two preceding claims, **characterized in that** the groove (2) forms a loop on the plug-in side (1.1).

4. The electrical contact element (1) as claimed in one of claims 1 to 3, **characterized in that** the optical fiber (3) is pressed into the groove (2).

5. The electrical contact element (1) as claimed in one of claims 1 to 3, **characterized in that** the optical fiber (3) is bonded into the groove (2).

6. The electrical contact element (1) as claimed in one of the preceding claims, **characterized in that** the optical fiber (3) has a Bragg grating.

7. The electrical contact element (1) as claimed in one of the preceding claims, **characterized in that** the optical fiber (3) is designed as a temperature sensor.

8. The electrical contact element (1) as claimed in one of claims 1 to 6, **characterized in that** the optical fiber (3) is designed as a humidity sensor.

## Revendications

1. Élément de contact électrique (1), dans lequel l'élément de contact (1) présente au moins une encoche (2) et une fibre optique (3) qui s'étend dans l'encoche (2),
**caractérisé en ce que** la fibre optique (3) est réalisée sous la forme d'un capteur, et **en ce que** l'encoche (2) commence à l'emplacement d'un côté connexion (1.2) de l'élément de contact (1) qui est tourné à l'opposé du côté fiche (1.1) et s'étend vers le côté fiche (1.1) puis se termine à nouveau à l'emplacement du côté connexion (1.2) .

2. Élément de contact électrique (1) selon la revendication précédente,
**caractérisé en ce que** le début et la fin de l'encoche (2) s'étendent parallèlement du côté connexion (1.2) vers le côté fiche (1.1) et sont reliés l'un à l'autre à l'emplacement du côté fiche (1.1).

3. Élément de contact électrique (1) selon l'une des deux revendications précédentes,
**caractérisé en ce que** l'encoche (2) forme une boucle à l'emplacement du côté fiche (1.1).

4. Élément de contact électrique (1) selon l'une des revendications 1 à 3,
**caractérisé en ce que** la fibre optique (3) est pressée dans l'encoche (2).

5. Élément de contact électrique (1) selon l'une des revendications 1 à 3,
**caractérisé en ce que** la fibre optique (3) est collée dans l'encoche (2).

6. Élément de contact électrique (1) selon l'une des revendications précédentes,
**caractérisé en ce que** la fibre optique (3) comprend un réseau de Bragg.

7. Élément de contact électrique (1) selon l'une des revendications précédentes,
**caractérisé en ce que** la fibre optique (3) est réalisée sous la forme d'un capteur de température.

8. Élément de contact électrique (1) selon l'une des revendications 1 à 6,
**caractérisé en ce que** la fibre optique (3) est réalisée sous la forme d'un capteur d'humidité.
